# EUROPEAN PATENT APPLICATION

(11) **EP 2 020 815 A1**
(43) Date of publication of application: **04.02.2009**
(21) Application number: 08103113.0
(22) Date of filing: 28.03.2008
(51) Int. Cl.: H04N 5/445, H04N 5/45

(54) **Method and apparatus for displaying a video signal**

(30) Priority: 24.07.2007 KR 20070074048
(71) Applicant: Samsung Electronics Co., Ltd., Yeongtong-gu Suwon-si, Gyeonggi-do (KR)
(72) Inventor: Han, Hee-ju, Gyeonggi-do (KR); Lee, Joo-heon, Gyeonggi-do (KR)
(74) Representative: Walaski, Jan Filip

(57) **Abstract**

A method for selecting channels for a main screen and a sub-screen, and an image display apparatus using the method are provided. The method for selecting channels enables a user to select channels for not only the main screen but also the sub-screen. If a channel of the sub-screen is selected from the channel list, the image display apparatus may automatically turn on the sub-screen so that the selected channel is displayed on the sub-screen.

## Description

The invention relates to selecting channels for a main screen and one or more sub-screens of a display apparatus and displaying an image. More particularly, apparatuses and methods consistent with the present invention relate to selecting channels to be displayed on a main screen and/or one or more sub-screens in an image display apparatus having a picture-in-picture (PIP) function.

Image display apparatuses display received video signals. Such image display apparatuses may provide a PIP function, whereby two or more video signals are received and displayed.

The PIP function enables a large main screen to be overlapped by a smaller sub-screen so that the main screen and sub-screen can be simultaneously displayed. If the PIP function is selected to receive a video signal while a program corresponding to another video signal is displayed, the program corresponding to the video signal may be displayed on the main screen, and a program corresponding to the other video signal may be displayed on the sub-screen, at the same time.

When using a related art image display apparatus, a user may turn on a sub-screen using a PIP button or a sub-screen button included in a remote controller in order to view video displayed on the sub-screen. Additionally, the user may switch between channels for the sub-screen using a sub-screen channel up/down button in order to select a desired channel in the conventional image display apparatus.

The remote controller includes the sub-screen channel up/down button to switch between channels for the sub-screen, in addition to buttons for turning on the sub-screen and changing the channel up or down. If a user desires to view a broadcast program on the sub-screen while another broadcast program is being displayed on the main screen, the sub-screen may be turned on by pressing the sub-screen button.

Additionally, in order to display broadcast programs which the user desires to view on the sub-screen, the user needs to search separately for each channel by which the desired broadcast programs are received, using the sub-screen channel up/down button.

Accordingly, as the user may not remember all the desired channels, it is impossible to directly display the broadcast programs corresponding to the desired channels on the sub-screen. In addition, when there are a plurality of sub-screens, it is difficult to select a plurality of channels for the sub-screens at once. In other words, there is a need to select a single sub-screen and search separately for and select the desired channels, and then to select the next sub-screen and search for and select the desired channels individually, in order to display the desired channels on the respective sub-screens. User inconvenience may thus increase.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method for selecting channels for a main screen and a sub-screen and an image display apparatus using the method, so that channels for the main screen and sub-screen may be easily selected using a channel list, which enables a user to view all selectable channels at once.

The present invention also provides a method for selecting channels for a main screen and a sub-screen and an image display apparatus using the method, in which, when a plurality of sub-screens exist, channels for the plurality of sub-screens may be selected at once.

The present invention further provides a method for selecting channels for a main screen and a sub-screen and an image display apparatus using the method, which enables a display of a sub-screen and selection of channels for the sub-screen even when a remote controller does not comprise separate keys to display the sub-screen and to select channels for the sub-screen.

According to an aspect of the present invention, there is provided a method for selecting channels for a main screen and a sub-screen, the method comprising: if a channel is selected from a channel list, displaying a screen selection menu for the selected channel; and displaying a video signal received via the selected channel on one of the main screen and the sub-screen set using the displayed screen selection menu.

The screen selection menu may show whether the video signal received via the selected channel is displayed on the main screen or on the sub-screen, and may comprise a main screen selection box and one or more sub-screen boxes.

The method may further comprise determining whether the sub-screen is turned on, if the sub-screen is set through the screen selection menu; turning on the set sub-screen, if it is determined that the set sub-screen is turned off; and tuning to the selected channel, receiving a video signal through the tuned channel and displaying the received video signal on the set sub-screen.

The method may further comprise tuning to the selected channel, receiving a video signal through the tuned channel and displaying the received video signal on the main screen, if the main screen is set through the screen selection menu.
The channels set to be displayed on the main screen or the sub-screen using the displayed screen selection menu may be shown on the channel list.

According to another aspect of the present invention, there is provided an image display apparatus comprising an on-screen-display (OSD) generator which displays a channel list and a screen selection menu; and a controller which controls the OSD generator to display the screen selection menu for a channel selected from the displayed channel list, and causes a video signal received via the selected channel to be displayed on one of a main screen and a sub-screen set using the displayed screen selection menu.

The screen selection menu may show whether the video signal received via the selected channel is displayed on the main screen or on the sub-screen, and may comprise a main screen selection box and one or more sub-screen boxes.

The image display apparatus may further comprise a sub-tuner which tunes to the selected channel and receives a video signal through the tuned channel, and a sub signal processor which displays the received video signal on the sub-screen. If the sub-screen is set through the screen selection menu, the controller may determine whether the sub-screen is turned on. If it is determined that the set sub-screen is turned off, the controller may control the sub signal processor to turn on the set sub-screen. The controller may control the sub-tuner and sub signal processor to receive a video signal through the tuned channel and display the received video signal on the set sub-screen.

The image display apparatus may further comprise a main tuner which tunes to the selected channel and receives a video signal through the tuned channel; and a main signal processor which displays the received video signal on the main screen. The controller may control the main tuner and main signal processor to receive a video signal through the selected channel and display the received video signal on the main screen, if the main screen is set through the screen selection menu.

The controller may control the OSD generator to display the channels set to be displayed on the main screen or the sub-screen using the displayed screen selection menu on the channel list.

According to another aspect of the present invention, there is provided a method for selecting channels for a main screen and a sub-screen, the method comprising: displaying a screen type selection menu for a channel which is selected from a channel list; and displaying a video signal received via the selected channel on a specific screen of a display set using the displayed screen type selection menu.

The screen type selection menu may show whether the video signal received via the selected channel is displayed on the main screen or on the sub-screen, and may comprise a main screen selection box and one or more sub-screen boxes.

The screen type selection menu may show whether the video signal received via the selected channel is displayed on a left screen or on a right screen, and may comprise a left screen selection box and one or more right screen boxes.

According to another aspect of the present invention, there is provided an image display apparatus comprising an on-screen-display (OSD) generator which displays a channel list and a screen type selection menu; and a controller which controls the OSD generator to display the screen selection menu for a channel selected from the displayed channel list, and causes a video signal received via the selected channel to be displayed on a specific screen of a display set using the displayed screen type selection menu.

The screen type selection menu may show whether the video signal received via the selected channel is displayed on the main screen or on the sub-screen, and may comprise a main screen selection box and one or more sub-screen boxes.
The screen type selection menu may show whether the video signal received via the selected channel is displayed on a left screen or on a right screen, and may comprise a left screen selection box and one or more right screen boxes.

Embodiments of the invention will now be described, by way of example, with reference to the accompanying drawings, in which:
Figure 1 is a block diagram showing an image display apparatus according to an exemplary embodiment of the present invention;
Figure 2 is a diagram showing an example of selection of channels for a main screen and a sub-screen, according to an exemplary embodiment of the present invention;
Figure 3 is a diagram showing another example of selection of channels for a main screen and a sub-screen, according to an exemplary embodiment of the present invention; and
Figure 4 is a flowchart explaining a method for selecting channels for a main screen and a sub-screen of the image display apparatus according to an exemplary embodiment of the present invention.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

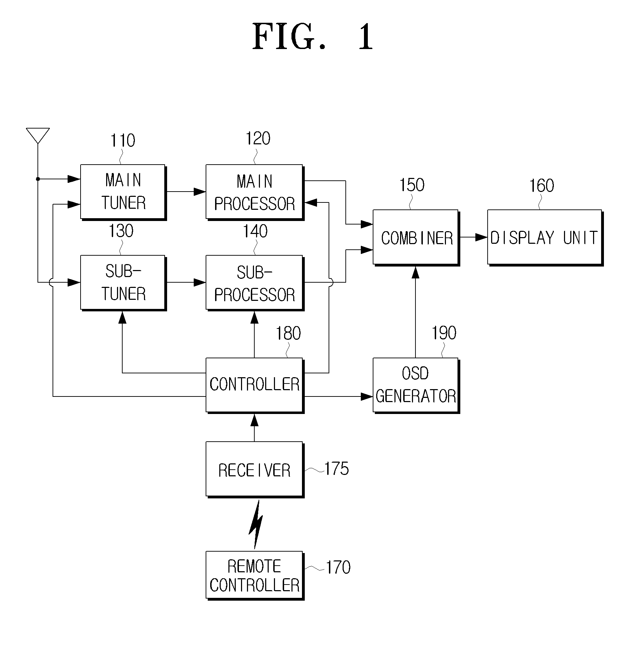

Figure 1 is a block diagram showing an image display apparatus according to an exemplary embodiment of the present invention.

The image display apparatus according to an exemplary embodiment of the present invention enables a user to select channels for not only a main screen but also a sub-screen from a channel list. If a channel of the sub-screen is selected from the channel list, the image display apparatus may automatically turn on the sub-screen so that the selected channel may be displayed on the sub-screen.

The image display apparatus of Figure 1 comprises a main tuner 110, a main processor 120, a sub-tuner 130, a sub-processor 140, a combiner 150, a display unit 160, a remote controller 170, a receiver 175, a controller 180 and an on-screen-display (OSD) generator 190.

The main tuner 110 tunes to a broadcast channel of the main screen, and receives a video signal from the tuned broadcast channel. The main processor 120 processes the video signal received from the main tuner 110, and generates video to be displayed on the main screen. In this situation, if a high definition video signal is received, the main processor 120 may process a single video signal, and if a low definition video signal is received, the main processor 120 may process two or more video signals. Additionally, the main tuner 110 may further receive video signals through another broadcast channel for one or more sub-screens, other than video to be displayed on the main screen.

The sub-tuner 130 tunes to a broadcast channel of the sub-screen, and receives a video signal from the tuned broadcast channel. The sub-processor 140 processes the video signal received from the sub-tuner 130, and generates video to be displayed on the sub-screen. In this situation, the sub-processor 140 may process video signals that may be displayed on one or more sub-screens.

The combiner 150 combines the videos to be displayed on the main screen and the sub-screen output from the main processor 120 and sub-processor 140, and displays a single video on the display unit 160.

The remote controller 170 comprises a key for requesting display of a channel list, and keys for selecting channels and for selecting the main screen and sub-screen. The receiver 175 receives user commands input through the remote controller 170, and transfers the received user commands to the controller 180.

If a channel list display command is received by the receiver 175, the controller 180 may control the OSD generator 190 to display the channel list. If a channel is selected from the channel list, the controller 180 may control the OSD generator 190 to display a screen selection menu.

The screen selection menu enables the user to select whether to display a video signal received through the selected channel on the main screen or the sub-screen. If the user selects the main screen using the screen selection menu, the controller 180 may control the main tuner 110 and main processor 120 so that the video signal received through the selected channel may be displayed on the main screen.

Alternatively, if the user selects the sub-screen using the screen selection menu, the controller 180 may control the sub-tuner 130 and sub-processor 140 so that the video signal received through the selected channel may be displayed on the sub-screen.

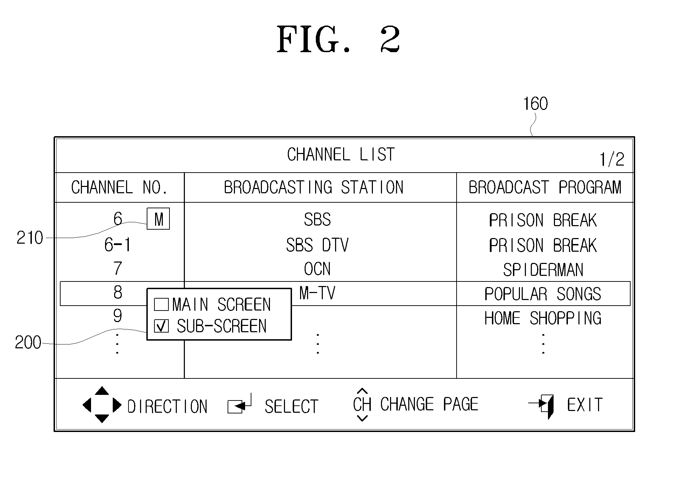

Figure 2 is a diagram showing an example of selection of channels for the main screen and sub-screen from the channel list, according to an exemplary embodiment of the present invention.

Figure 2 shows the channel list displayed on the display unit 160 by the OSD generator 190. Specifically, the channel list comprises information on selectable channel numbers, broadcasting station names and broadcast programs currently displayed on corresponding channels.

If the user selects a channel from the channel list using four direction keys and selection key included in the remote controller 170, the OSD generator 190 may display a screen selection menu 200 on a row showing the selected channel under the control of the controller 180. For example, if channel 8 is selected, the screen selection menu 200 may be displayed on a row showing channel 8.

The user may decide whether to display a broadcast program received through the channel selected using the four direction keys and selection key on the main screen or on the sub-screen, using the screen selection menu 200.

Accordingly, the screen selection menu 200 may comprise setting boxes through which the user determines whether to display the broadcast program received through the selected channel on the main screen or on the sub-screen.

If either the main screen or the sub-screen is set to display the broadcast program, a setting state mark 210 notifying which channels are set to be displayed on the main screen or the sub-screen may be displayed on the channel list. For example, the setting state mark 210, namely "M", shown next to channel 6 indicates that channel 6 is set to be displayed on the main screen.

Accordingly, if setting the channel list as described above is completed, as an example, a broadcast program "Prison Break", broadcast on channel 6, may be displayed on the main screen, and another broadcast program "Popular Song", broadcast on channel 8, may be displayed on the sub-screen.

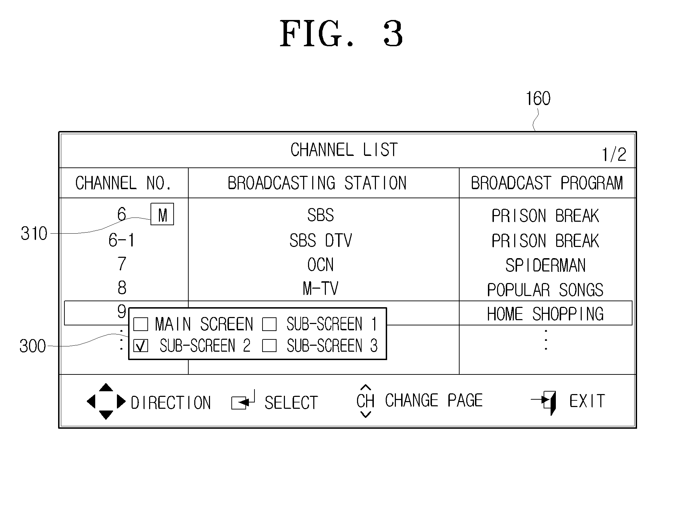

Figure 3 is a diagram showing another example of selection of channels for the main screen and sub-screen from the channel list, according to an exemplary embodiment of the present invention.

Figure 3 shows a screen selection menu 300 that may be displayed on the display unit 160 by the OSD generator 190 when a plurality of sub-screens exist. The screen selection menu 300 comprises setting boxes to set channels to be displayed on a single main screen or three sub-screens.

The user may determine which sub-screen is suitable for displaying a program "Home Shopping" received on channel 9 as seen in Figure 3, and the position of the displayed sub-screen may be determined by the user. For example, if a second sub-screen is set to display "Home Shopping", the sub-screen on which "Home Shopping" is displayed may be shown at the center of the right-hand edge of the main screen.

If either the main screen or any of the sub-screen is set to display the broadcast program, a setting state mark 310 notifying which channels are set to be displayed on the main screen or the sub-screen may be displayed on the channel list. For example, the setting state mark 310, namely "M", shown next to channel 6 indicates that channel 6 is set to be displayed on the main screen.

Although not shown in Figure 1, if there are a plurality of sub-screens, the image display apparatus may also comprise sub-tuners 130 having the same number of sub-screens. For example, if three sub-screens exist, the image display apparatus may also comprise three sub-tuners 130.

Accordingly, the channel list informs the user may be informed about programs received through which channels, without the user needing to remember programs or corresponding channels. Additionally, the user may easily select channels for the main screen and sub-screen using the channel list. Even if there are a plurality of sub-screens, the user may easily select channels for the plurality of sub-screens at once.

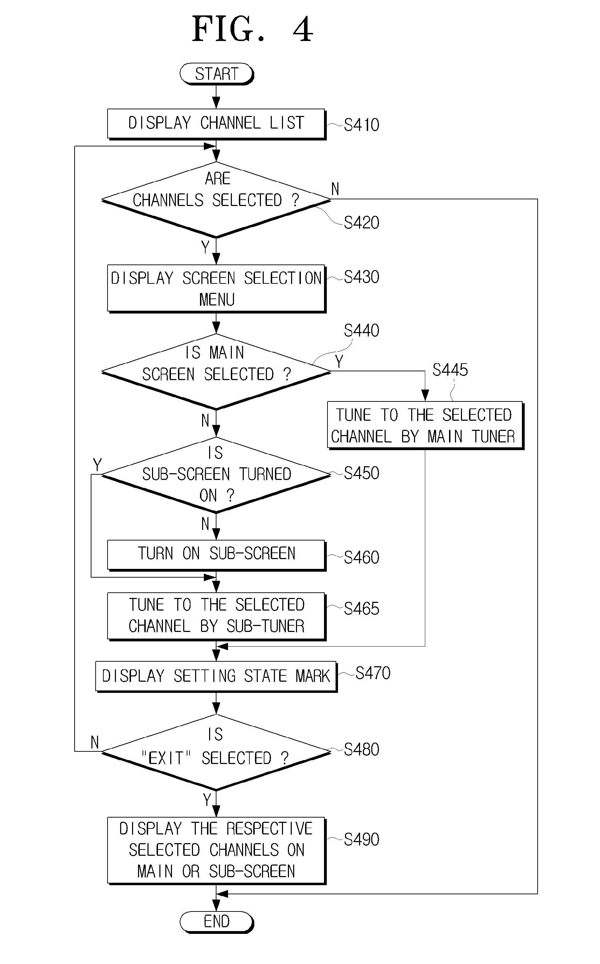

Figure 4 is a flowchart explaining a method for selecting channels for the main screen and sub-screen of the image display apparatus according to an exemplary embodiment of the present invention.

As shown in Figure 4, the controller 180 may control the OSD generator 190 to display the channel list (S410). In more detail, if a channel list display command is received by the receiver 175, the controller 180 causes the channel list to be displayed.

The controller 180 determines whether channels are selected from the channel list (S420). If a selection signal is input through the receiver 175, the controller 180 determines that channels are selected.

If it is determined that channels are selected, the controller 180 controls the OSD generator 190 to display the screen selection menu on a row showing the selected channel (S430). The controller 180 then determines whether the main screen is selected from the screen selection menu (S440).

If it is determined that the main screen is selected, the controller 180 controls the main tuner 110 to tune to the selected channel (S445). Specifically, the controller 180 controls the main tuner 110 to tune to the selected channel and receive a video signal through the tuned channel in order to display the video signal received through the selected channel on the main screen.

Alternatively, if it is determined that the main screen is not selected, that is, if it is determined that the sub-screen is selected, the controller 180 determines whether the sub-screen is turned on (S450). In this situation, if operations of the sub-tuner 130 and sub-processor 140 are not detected, the controller 180 may determine that the sub-screen is turned off.

If it is determined that the sub-screen is turned off, the controller 180 controls the operation of the sub-processor 140 so that the sub-screen may be turned on (S460). In other words, if a channel to be displayed on the sub-screen is selected from the channel list, the sub-screen may be automatically shown. Accordingly, there is no need for the user to manually turn on the sub-screen using the sub-screen button separately included in the remote controller 170.

The controller 180 also controls the sub-tuner 130 to tune to the selected channel (S465). Specifically, the controller 180 controls the sub-tuner 130 to tune to the selected channel and receive a video signal through the tuned channel in order to display the video signal received through the selected channel on the sub-screen.
In this situation, the controller 180 controls the OSD generator 190 to display the setting state mark on the channel list (S470). This enables the user to check the channels set to be displayed on the main screen or sub-screen.

The controller 180 then determines whether "Exit" is selected from the channel list (S480). If it is determined that "Exit" is selected, the controller 180 determines that setting channels for the main screen and sub-screen is completed.

If it is determined that "Exit" is selected, the controller 180 controls the main processor 120, sub-processor 140 and combiner 150 to display the selected channels on the main screen or sub-screen (S490).

Alternatively, if it is determined that "Exit" is not selected, the controller 180 repeatedly performs operations S420 to S470 in order to select channels to be displayed on a plurality of sub-screens.

According to the exemplary embodiments of the present invention as described above, it is possible to show the sub-screen and select channels of the sub-screen using only the channel list, without using the separate keys of the remote controller 170. Accordingly, the number of times of manipulation may be fewer than when the keys of the remote controller 170 are used to select channels of the sub-screen.

Although the video is displayed on the main screen or sub-screen in the exemplary embodiment of the present invention, the present invention may also be applied to an image display apparatus capable of displaying video by dividing a screen into left and right halves of a screen and top and bottom halves of a screen, and left and right areas of a screen and upper and lower areas of a screen having different sizes, or other screens, and the type of screen corresponding to the selected channels may be selected using the channel list.

Both the main screen and sub-screen may be selected from the channel list, and the sub-screen selected from the channel list may be automatically displayed, thereby increasing user convenience. Furthermore, the number of times of manipulation to select channels of a plurality of sub-screens may be reduced, and thus utility may be enhanced.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method of displaying a video signal at one of a plurality of display positions on a display apparatus, the method comprising:
providing for a user to select one of the plurality of display positions in response to a selection of the video signal from a plurality of video signals; and
displaying the selected video signal in accordance with a selected one of the display positions.

2. A method according to claim 1, wherein the video signal comprises a channel, the plurality of display positions comprise a main screen and a sub-screen of the display apparatus, the step of providing for a user to select one of the display positions comprises:
displaying a screen selection menu for a channel which is selected from a channel list; and the step of displaying the selected video signal comprises:
displaying the selected video signal received via the selected channel on one of the main screen and the sub-screen set using the displayed screen selection menu.

3. The method as claimed in claim 2, wherein the screen selection menu enables a user to determine whether to display the video signal received via the selected channel on the main screen or the sub-screen, and the screen selection menu comprises a main screen selection box and at least one sub-screen box.

4. The method as claimed in claim 2 or 3, further comprising:
determining whether the sub-screen is turned on if the sub-screen is set through the screen selection menu;
turning on the set sub-screen if it is determined that the set sub-screen is turned off; and
tuning to the selected channel, receiving a video signal through the tuned channel and displaying the received video signal on the set sub-screen.

5. The method as claimed in claim 2, 3 or 4, further comprising:
tuning to the selected channel, receiving a video signal through the tuned channel and displaying the received video signal on the main screen, if the main screen is set through the screen selection menu.

6. The method as claimed in any one of claims 2 to 5, wherein channels set to be displayed on the main screen or the sub-screen using the displayed screen selection menu are shown on the channel list.

7. The method as claimed in claim 2, wherein the screen selection menu comprises a screen type selection menu for showing whether the video signal received via the selected channel is displayed on the main screen or the sub-screen, and the screen type selection menu comprises a main screen selection box and at least one sub-screen box.

8. The method as claimed in claim 2, wherein the screen selection menu shows whether the video signal received via the selected channel is displayed on a left screen or a right screen, and the screen selection menu comprises a left screen selection box and at least one right screen box.

9. An image display apparatus comprising:
means for enabling a user to select one of a plurality of display positions on the image display apparatus in response to a selection of a video signal from a plurality of video signals; and
means for controlling the apparatus to display the selected video signal in accordance with a selected one of the plurality of display positions.

10. An image display apparatus according to claim 9, wherein the video signal comprises a channel, the plurality of display positions comprise a main screen and a sub-screen of the display apparatus, the enabling means comprises:
an on-screen-display (OSD) generator for displaying a channel list and a screen selection menu; and the controlling means comprises:
a controller for controlling the OSD generator to display the screen selection menu for a channel selected from the displayed channel list, and for causing the video signal received via the selected channel to be displayed on one of a main screen and a sub-screen set using the screen selection menu.

11. The image display apparatus as claimed in claim 10, wherein the screen selection menu is arranged to show whether the video signal received via the selected channel is displayed on the main screen or the sub-screen, and the screen selection menu comprises a main screen selection box and at least one sub-screen box.

12. The image display apparatus as claimed in claim 10 or 11, further comprising:
a sub-tuner for tuning to the selected channel and receiving a video signal through the tuned channel; and
a sub signal processor for displaying the received video signal on the sub-screen,
wherein the controller is arranged to determine whether the sub-screen is turned on if the sub-screen is set through the screen selection menu, control the sub signal processor to turn on the set sub-screen if it is determined that the set sub-screen is turned off, and control the sub-tuner and sub signal processor to receive the video signal through the tuned channel and display the received video signal on the set sub-screen.

13. The image display apparatus as claimed in claim 10, 11 or 12, further comprising:
a main tuner for tuning to the selected channel and receives a video signal through the tuned channel; and
a main signal processor for displaying the received video signal on the main screen,
wherein the controller is arranged to control the main tuner and main signal processor to receive a video signal through the selected channel and display the received video signal on the main screen, if the main screen is set through the screen selection menu.

14. The image display apparatus as claimed in any one of claims 10 to 13, wherein the controller is arranged to control the OSD generator to display on the channel list the channels set to be displayed on the main screen or the sub-screen using the screen selection menu.

15. The image display apparatus as claimed in claim 10, wherein the screen type selection menu comprises a screen type selection menu for showing whether the video signal received via the selected channel is displayed on the main screen or the sub-screen, and the screen type selection menu comprises a main screen selection box and at least one sub-screen box.

16. The image display apparatus as claimed in claim 10, wherein the screen selection menu is arranged to show whether the video signal received via the selected channel is displayed on a left screen or a right screen, and the screen selection menu comprises a left screen selection box and at least one right screen box.
